# EUROPEAN PATENT APPLICATION

(11) **EP 1 048 447 A2**
(43) Date of publication of application: **02.11.2000**
(21) Application number: 00303536.7
(22) Date of filing: 27.04.2000
(51) Int. Cl.: B29D 31/00, F01N 3/28

(54) **Molded honeycomb material and process for production thereof**

(30) Priority: 28.04.1999 JP 12119699; 29.11.1999 JP 33772699
(71) Applicant: NGK INSULATORS, LTD., Nagoya-City, Aichi Prefecture 467-8530 (JP)
(72) Inventor: Kato, Shigeki, Nagoya-City, Aichi-Prefecture, 466-0855 (JP)
(74) Representative: Paget, Hugh Charles Edward

(57) **Abstract**

A molded honeycomb material is obtained by subjecting a mixture of a raw material powder and a binder to extrusion molding. In the honeycomb material no open pore is present and the binder includes a thermoplastic material which is molten at the molding temperature. A process for producing the above molded honeycomb material, includes heating a mixture of a raw material powder and a binder to a molding temperature to melt the binder, subjecting the mixture to extrusion molding, and cooling and solidifying the extrudate. The honeycomb material has a small partition wall thickness and can be mass-produced without impairing the product quality.

## Description

### Background of the Invention and Related Art Statement

The present invention relates to an extrusion-molded honeycomb material used, for example, as a carrier for catalyst for automobile exhaust gas purification, as well as to a process for producing the honeycomb material.

In recent years, regulation for exhaust gas has become stricter for environmental protection. In this connection, a catalyst for exhaust gas purification having a higher purification ability is required. Meanwhile, an engine of lower fuel consumption and higher output is required strongly. To respond to such a situation, the catalyst for exhaust gas purification is required to show lower pressure loss in addition to the higher purification ability.

To satisfy these requirements, it is vigorously conducted to allow the honeycomb structure used in the catalyst for exhaust gas purification to have a thinner partition wall so that the honeycomb structure can show easier gas flow and lower pressure loss and the catalyst can have a lighter weight and lower heat capacity and can have a higher purification ability during engine warm-up. The partition wall thickness of honeycomb structure has heretofore been 150 µm (6 mil) mainly, but it is shifting to 50 µm (2 mil) mainly. Incidentally, "honeycomb structure" refers to a structure in which a large number of cells are separated by partition walls.

A honeycomb structure is ordinarily produced by mixing a raw material powder (e.g. a ceramic powder or a metal powder) with a binder or the like, subjecting the resulting mixture to extrusion molding through a die having lattice-like slits, and drying and firing the resulting extrudate. As the above binder, there has been used a water-soluble thermosetting methyl cellulose type binder.

As the partition wall of honeycomb structure is thinner, the width of slit of die need be smaller. Therefore, in molding a honeycomb structure having a thin partition wall, it is required to use a binder of high fluidity which can quickly flow into a die. Further, as the partition wall of honeycomb structure is thinner, the fresh extrudate from die has a smaller strength and tends to deform owing to the own weight; therefore, it is necessary to use a binder of high shape retainability which can solidify soon after leaving the die.

Hence, it has been conducted to mold a honeycomb structure by using a molding material of high hardness and higher shape retainability or a molding material of low hardness and high fluidity.

Such molding materials have had problems as follows. A molding material of high hardness is inferior in fluidity; therefore, (1) it does not flow into a die easily, resulting in low productivity and (2) it requires a high molding pressure and repeated molding brings about deformation or wear of die.

With a molding material of low hardness, it is necessary to harden by thermal gelation of the binder contained in the molding material, by way of dielectric drying to allow the extrudate from die to have a desired strength. In this case, the transfer of the extrudate to a dielectric dryer is conducted with a gas flow applied to the extrudate from below the extrudate to prevent the deformation of the extrudate caused by the own weight; as a result, the extrudate comes to have cracks caused by drying, at the portion to which the gas flow is applied.

### Summary of the Invention

In view of the above situation, the present invention aims at providing a molded honeycomb material having a thin partition wall and a process for mass-producing such a honeycomb structure without impairing the honeycomb quality.

According to the present invention, there is provided a molded honeycomb material obtained by subjecting a mixture of a raw material powder and a binder to extrusion molding, in which honeycomb material no open pore is present and the binder comprising a thermoplastic material which is molten at the molding temperature.

In the molded honeycomb structure of the present invention, the binder is preferably water-insoluble and is preferably a wax, a thermoplastic resin or their mixture.

When the binder is a mixture of a wax and a thermoplastic resin, the mixing ratio of the thermoplastic resin in the binder is preferably 35 to 80% by weight, more preferably 40 to 70% by weight, further preferably 45 to 60% by weight. The raw material powder can be a ceramic powder (e.g. cordierite) or a metal powder.

The molded honeycomb material of the present invention can be used as a carrier for the catalyst for removing harmful substances and dust from an automobile exhaust gas.

According to the present invention, there is also provided a process for producing the above-mentioned molded honeycomb material, which comprises heating a mixture of a raw material powder and a binder to a molding temperature to melt the binder, subjecting the mixture to extrusion molding, and cooling and solidifying the extrudate.

### Description of Preferred Embodiments

The molded honeycomb material of the present invention can be produced by subjecting a mixture of a raw material and a binder to extrusion molding. As the binder, a thermoplastic material is used which is molten at the molding temperature.

The thermoplastic material can be melted by a heat and can have different viscosities at different temperatures; therefore, it can have desired fluidity by appropriately selecting the temperature and enables efficient mass production of a molded honeycomb material.

The molten thermoplastic material solidifies when cooled. Therefore, the binder can be easily solidified by rapidly cooling the extrudate from extrusion die with cold water, cold air or the like, before the extrudate deforms owing to the own weight, whereby the extrudate can retain its shape.

In the present invention, a water-insoluble binder is used, which makes unnecessary the drying of the molded material. In extrusion molding of a mixture of a raw material powder and a water-soluble binder (a mixture of a raw material and a binder is hereinafter called "raw material mixture"), foams in the raw material mixture must be removed by vacuum defoaming and the local drying taking place during vacuum defoaming hardens the dried portion and causes plugging of die. In contrast, in extrusion molding of a mixture of a raw material powder and a water-insoluble binder, no local drying takes place, no plugging of die takes lace, and productivity is high. Incidentally, no vacuum defoaming is necessary in the latter extrusion molding using a water-insoluble binder.

In the present invention, the specific water-insoluble binder is preferred to be a wax or a thermoplastic resin. As the wax, preferred are paraffin wax, microcrystalline wax, etc. As the thermoplastic resin, preferred are ordinary thermoplastic resins such as EVA, polyethylene, polystyrene, liquid crystal polymer, engineering plastic and the like. In the present invention, these binders can be used singly or in combination of two or more kinds. To the binder may be added an auxiliary agent such as coupling agent, lubricant, dispersing agent or the like.

In the present invention, when a mixture of a wax and a thermoplastic resin is used as the binder, the mixing ratio of the thermoplastic resin in the binder is preferably 35 to 80% by weight, more preferably 40 to 70% by weight, further preferably 45 to 60% by weight.

The reason why the above mixing ratio of the thermoplastic resin is preferred, is that the amount of the thermoplastic resin in the binder has influences on the shape retainability and molding pressure during molding as well as on the amount of expansion, amount of cracks and adhesion to setter during dewaxing and firing.

As the amount of the thermoplastic resin in the binder is larger, the shape retainability during molding is better, the molding pressure required is higher, and the amount of expansion and amount of defect during dewaxing and firing are smaller.

For the above reasons, the upper limit of the mixing ratio of the thermoplastic resin in the binder is set preferably at 80% by weight, more preferably at 70% by weight, further preferably at 60% by weight. Thereby, shape can be retained and increase in molding pressure can be prevented; as a result, a molded honeycomb material small in partition wall thickness and large in cell density can be satisfactorily obtained with no deformation of extruder die.

When the mixing ratio of the thermoplastic resin in the binder is too large, the extrudate has a high temperature (a large heat stress), making bad the handleability.

In the present invention, the mixing ratio of the thermoplastic resin in the binder is set preferably at 35% by weight, more preferably at 40% by weight, further preferably at 45% by weight. Thereby, the amount of expansion, amount of cracks and adhesion to setter during dewaxing and firing can be reduced.

In the present invention, the mixture of the raw material powder and the binder is extrusion-molded. In the mixture, the amount of the binder differs depending upon the kind of the binder used and the binder is added in such an amount that desired fluidity can be obtained.

In the present invention, a ceramic powder or a metal powder is preferably used as the raw material powder. As the ceramic powder, there can be used a powder of an oxide (e.g. cordierite, alumina or mullite) or a nitride ceramic (e.g. silicon nitride, silicon carbide or aluminum nitride). As the metal powder, there can be used a powder of Fe, Cr, Ni, Al or the like.

In the present invention, a molded honeycomb material is produced by extrusion molding. The kneading apparatus used therein can be any apparatus as long as it allows heating and pressurization, and there can be used an ordinary kneader, a pressure kneader, a twin-screw continuous kneader and extruder or the like.

The molding apparatus used in the present invention can be any apparatus as long as it allows heating and pressurization and has an extrusion function. There can be used an extruder of plunger type, a pug mill, an injection molding machine, a single-screw continuous extruder, a twin-screw continuous kneader or the like.

In the present invention, kneading and molding may be conducted simultaneously using, for example, a twin-screw continuous kneader and extruder which can conduct kneading and molding simultaneously.

In continuous molding, it is necessary to atomize the binder. The atomization can be conducted, for example, by spray-drying or freeze-grinding. There is no restriction as to the heating means of the molding apparatus, and the heating means may be a heater or circulation of a heating medium such as oil or the like.

The binder is appropriately selected depending upon the cell structure of desired honeycomb. A molded material of smaller partition wall thickness and smaller cell density must have a larger strength for shape retention; in this case, therefore, the binder used therein needs to contain a higher content of a thermoplastic resin relative to a wax. For example, in producing a molded material having a partition wall thickness of 12 mil and a cell density of 300 cells/in², the binder can consist of a wax alone and molding is possible; in producing a molded material having a partition wall thickness of 4 to 1 mil and a cell density of 500 to 1,200 cells/in², there is used a mixed binder of a wax and a thermoplastic resin wherein the content of the thermoplastic resin is preferably 35 to 80% by weight, more preferably 40 to 70% by weight, further preferably 45 to 60% by weight. Needless to say, a satisfactory honeycomb material can be obtained even with a thermoplastic resin alone.

The molding temperature of the raw material mixture is determined by the kind of the binder used. The molding temperature is about 60 to 100°C when the binder is, for example, a wax alone or a mixture of a wax and an EVA; when a high-melting thermoplastic resin is used, the temperature is about 280°C in the case of a polyethylene and about 350°C in the case of a liquid crystal polymer. Use of a binder of low melting point is favorable in view of the handling and thermal stress of the extrudate.

The kneading and molding temperature need be controlled so that the binder is not deteriorated.

The viscosity of the raw material mixture is determined depending upon the kind and amount of the binder used and the molding conditions (temperature and pressure) selected and is in a range wherein a honeycomb material can be molded. The amount of the binder can be appropriately set depending upon the kind of the raw material powder.

In the present invention, the extrudate from extruder die is cooled and solidified to prevent deformation of the extrudate. There is no restriction as to the method of cooling, and air cooling, water cooling (spraying) or the like can be used. Alternatively, the extrudate may be dropped into water for rapid cooling. Forced cooling is unnecessary depending upon the molding temperature used. The extrudate is pushed out from an extrusion molding machine ordinarily into a horizontal direction, but may be pushed out downward using a vertical molding machine.

The cooling temperature may be a temperature at which the binder solidifies. The difference between the molding temperature and the cooling temperature is preferred to be small in view of the small stress during cooling. The cooling rate is preferred to be small.

In the present invention, there is no particular restriction as to the sectional shape of the cell of the molded honeycomb material produced. The cell sectional shape may be a polygon (e.g. triangular, rectangular or hexagonal), a circle or the like. The cell density may be 300 to 2,000 cells/in².

The firing of the molded material is conducted, at low temperature ranges, under conditions where no cell cutting takes place, in view of the vaporization curve of the binder and, at high temperature ranges, under conditions where the intended porosity and thermal expansion coefficient, etc. can be achieved.

The dewaxing and firing of the molded honeycomb material can be conducted in an atmosphere (e.g. air, inert atmosphere or vacuum) which is appropriately selected depending upon the kind of the raw material powder used.

For example, when the raw material powder is a cordierite powder (an oxide), dewaxing is conducted in air and then firing is conducted in air. Ordinarily, dewaxing and firing are conducted simultaneously in a periodic kiln or a continuous kiln such as tunnel or the like.

In using the honeycomb structure produced as above, as a catalyst for automobile exhaust gas purification, a γ-alumina layer is formed on the cell partition wall; in the pores of the γ-alumina layer is supported a catalyst component, i.e. a noble metal such as platinum, rhodium, vanadium or the like; and the catalyst component is baked at a temperature of about 600°C.

The present invention is described in more detail below by way of Examples. However, the present invention is not restricted to these Examples.

### Examples 1 to 6

Molded honeycomb materials having circular ends and a rectangular cell sectional shape were produced using a cordierite powder as a raw material powder and a wax as a binder. The cell density and partition wall thickness of each molded honeycomb material are shown in Table 2.

First, to a cordierite powder was added a binder having an average particle diameter of 100 µm so that the content of the binder in the raw material mixture became 22% by weight. The mixture was fed into a continuous kneader and extruder to conduct kneading and molding. The molding temperature of 60°C was appropriately determined so as to match the raw material mixture and the desired cell structure. The weight ratio of the binder components was 90 (a paraffin wax produced by Nippon Seiro Co., Ltd.), 6 (a microcrystalline wax produced by Nippon Seiro Co., Ltd.) and 4 (oleic acid produced by Katayama Chemical Industries Co., Ltd.).

Next, the extrudate from the extruder die was allowed to cool. The molded honeycomb material obtained was examined visually for cell shape and roundness of outer diameter. The results are shown in Table 2. The molded material was fired at 1,430°C for 3 hours to obtain individual honeycomb structures.

### Examples 7 to 12

Molded honeycomb materials similar to those of Examples 1 to 6 were produced in the same manner as in Examples 1 to 6 except that there was used, as the binder, a 1:1 (by weight) mixture of waxes and an EVA. The weight ratio of the binder components was 45 (a paraffin wax produced by Nippon Seiro Co., Ltd.), 3 (a microcrystalline wax produced by Nippon Seiro Co., Ltd.), 48 (an EVA produced by DuPont-Mitsui Polychemicals Co., Ltd.) and 4 (oleic acid produced by Katayama Chemical Industries Co., Ltd.). The molding temperature was 75°C. The cell density and partition wall thickness of each molded honeycomb material were as shown in Table 2. The viscosity of the binder was measured using a flow tester. The measurement was made at temperatures of 60°C, 65°C, 70°C and 75°C using a capillary diameter of 1 mm. The results are shown in Table 1. Each molded honeycomb material obtained was examined for cell shape and roundness of outer diameter in the same manner as in Examples 1 to 6. The results are shown in Table 2. Each molded material was fired under the same conditions as in Examples 1 to 6 to obtain individual honeycomb structures.

**Table 1**

| Temperature (°C) | Viscosity of binder (dPa.s) | |
|---|---|---|
| | 981x10⁴ Pa | 1961x10⁴ Pa |
| 60 | No fluidity | 47000 |
| 65 | 20000 | 3400 |
| 70 | 7400 | 1800 |
| 75 | 4000 | 1400 |

### Examples 13 to 18

Molded honeycomb materials similar to those of Examples 1 to 6 were produced in the same manner as in Examples 1 to 6 except that an EVA was used as the binder. The weight ratio of the binder components was 100 (an EVA produced by DuPont-Mitsui Polychemicals Co., Ltd.) and 5 (oleic acid produced by Katayama Chemical Industries Co., Ltd.). The molding temperature was 110°C. The cell density and partition wall thickness of each molded honeycomb material were as shown in Table 2. Each molded honeycomb material obtained was examined for cell shape and roundness of outer diameter in the same manner as in Examples 1 to 6. The results are shown in Table 2. Each molded material was fired under the same conditions as in Examples 1 to 6 to obtain individual honeycomb structures.

### Comparative Examples 1 to 6

Molded honeycomb materials having circular ends and a rectangular cell sectional shape were produced using a cordierite powder as a raw material powder and methyl cellulose (a product of Shin-Etsu Chemical Co., Ltd.) as a binder. The cell density and partition wall thickness of each molded honeycomb material are shown in Table 2.

First, to a cordierite powder were added a binder and water so that the contents of the binder and water in the raw material mixture became 7% by weight and 30 % by weight, respectively. The mixture was fed into a continuous kneader and extruder to conduct kneading and molding. The molding temperature was 20°C.

Next, the extrudate from the extruder die was dried. The molded honeycomb material obtained was examined for cell shape and roundness of outer diameter in the same manner as in Examples 1 to 6. The results are shown in Table 2. The molded material was fired under the same conditions as in Examples 1 to 6 to obtain individual honeycomb structures.

**Table 2**

| | Partition wall thickness (mil) | Cell density (cells/ in²) | Binder | Cell shape | Roundness of outer diameter |
|---|---|---|---|---|---|
| Example 1 | 12 | 300 | Wax | No deformation | No deformation |
| Example 2 | 4 | 900 | Ditto | No deformation | No deformation |
| Example 3 | 2 | 400 | Ditto | Big deformation | Big deformation |
| Example 4 | 2 | 900 | Ditto | Intermediate deformation | Intermediate deformation |
| Example 5 | 2 | 1200 | Ditto | Slight deformation | Slight deformation |
| Example 6 | 1 | 900 | Ditto | Big deformation | Big deformation |
| Example 7 | 12 | 300 | Wax + EVA (1:1) | No deformation | No deformation |
| Example 8 | 4 | 900 | Ditto | No deformation | No deformation |
| Example 9 | 2 | 400 | Ditto | No deformation | No deformation |
| Example 10 | 2 | 900 | Ditto | No deformation | No deformation |
| Example 11 | 2 | 1200 | Ditto | No deformation | No deformation |
| Example 12 | 1 | 900 | Ditto | Slight deformation | Slight deformation |
| Example 13 | 12 | 300 | EVA | No deformation | No deformation |
| Example 14 | 4 | 900 | Ditto | No deformation | No deformation |
| Example 15 | 2 | 400 | Ditto | No defor-mation | No deformation |
| Example 16 | 2 | 900 | Ditto | No deformation | No deformation |
| Example 17 | 2 | 1200 | Ditto | No deformation | No deformation |
| Example 18 | 1 | 900 | Ditto | No deformation | No deformation |
| Comparative Example 1 | 12 | 300 | Aqueous methyl cellulose | No deformation | No deformation |
| Comparative Example 2 | 4 | 900 | Ditto | No deformation | No deformation |
| Comparative Example 3 | 2 | 400 | Ditto | Big deformation | Big deformation |
| Comparative Example 4 | 2 | 900 | Ditto | Intermediate deformation | Intermediate deformation |
| Comparative Example 5 | 2 | 1200 | Ditto | Slight deformation | Slight deformation |
| Comparative Example 6 | 1 | 900 | Ditto | Big deformation | Big deformation |

As is clear from Table 2, no drying step was employed in Examples and the number of production steps was smaller in Examples than in Comparative Examples; nevertheless, there could be obtained, in Examples, molded honeycomb materials having dimensional accuracies equal or superior to those of Comparative Examples. No difference in thermal expansion coefficient and open porosity of sintered honeycomb material was seen between Examples and Comparative Examples.

### Examples 19 to 25 and Comparative Example 7

Molded honeycomb materials having circular ends and a rectangular cell sectional shape were produced using a cordierite powder as a raw material powder and a wax as a binder. Each molded honeycomb material had a cell density of 600 cells/in² and a partition wall thickness of 2.0 mil.

First, to a cordierite powder was added a binder having an average particle diameter of 100 µm so that the content of the binder in the raw material mixture became 22% by weight. The mixture was heat-kneaded at a pressure of 1.0x10⁵ Pa in a pressure kneader, cooled, then disintegrated in a jaw crusher, and passed through a single-screw extruder at the molding temperature and molding pressure shown in Table 3, to obtain molded honeycomb materials.

The binder was a mixture of a wax and an EVA (a product of DuPont-Mitsui Polychemicals Co., Ltd.) shown in Table 3.

The weight ratio of the binder components was 90 (a paraffin wax produced by Nippon Seiro Co., Ltd.), 6 (a microcrystalline wax produced by Nippon Seiro Co., Ltd.) and 4 (oleic acid produced by Katayama Chemical Industries Co., Ltd.).

The extrudate from the extruder die was allowed to cool. Each of the thus-obtained molded honeycomb materials was evaluated. The results are shown in Table 3.

**Table 3**

| | Molding | | | |
|---|---|---|---|---|
| | EVA amount (wt. %) | Temperature (°C) | Pressure (10⁴xPa) | Results |
| Example 19 | 35 | 64 | 686 | Good |
| Example 20 | 40 | 70 | 981 | Good |
| Example 21 | 45 | 72 | 1079 | Good |
| Example 22 | 50 | 75 | 1177 | Good |
| Example 23 | 60 | 83 | 1569 | Good |
| Example 24 | 70 | 92 | 1961 | High in temperature and slightly inferior in handleability |
| Example 25 | 80 | 100 | 2354 | Slight deformation of die |
| Comparative Example 7 | 25 | 60 | 490 | Deformation of cell |

Each molded honeycomb material was heated from room temperature to 500°C at a rate of 50°C per hour, from 500°C to 1,200°C at a rate 100°C per hour and from 1,200°C to 1,430°C at a rate of 50°C per hour, and kept at 1,430°C for 3 hours, to conduct dewaxing and firing, whereby were obtained individual honeycomb structures. Each honeycomb structure was evaluated for amount of expansion, cracking in firing and adhesion to setter. The results are shown in Table 4.

**Table 4**

| | Dewaxing and firing | | |
|---|---|---|---|
| | Amouont of expansion (%) | Cracking in firing | Adhesion to setter |
| Example 19 | 2.6 | Small defect inside | Adhesion |
| Example 20 | 2.4 | Small defect | slight adhesion |
| Example 21 | 2.2 | Good | No adhesion |
| Example 22 | 2.0 | Good | No adhesion |
| Example 23 | 1.6 | Good | No adhesion |
| Example 24 | 1.2 | Good | No adhesion |
| Example 25 | 0.8 | Good | No adhesion |
| Comparative Example 7 | 3.0 | Cracking outside and inside | Adhesion |

As is clear from the results of Table 3, in Examples 19 to 25, shape retention and prevention of pressure increase were possible during molding by controlling the mixing ratio of thermoplastic resin in binder at 35 to 80% by weight; as a result, molded honeycomb materials of small partition wall thickness and large cell density could be obtained satisfactorily.

As is clear from the results of Table 4, in Examples 19 to 25, it was possible to reduce, during dewaxing and firing, the amount of expansion, the amount of cracking and the adhesion to setter.

According to the present invention, a molded honeycomb material having a small partition wall thickness of 25 to 100 µm can be mass-produced efficiently without generating cracks or deforming the die of extruder. Further in the present invention, the drying of molded honeycomb material is unnecessary owing to the use of a water-insoluble binder; there is no plugging of die caused by vacuum defoaming; and dewaxing is easy; therefore, productivity is further enhanced.

## Claims

1. A molded honeycomb material obtained by subjecting a mixture of a raw material powder and a binder to extrusion molding, in which honeycomb material no open pore is present and the binder comprising a thermoplastic material which is molten at the molding temperature.

2. A molded honeycomb material according to Claim 1, wherein the binder is water-insoluble.

3. A molded honeycomb material according to Claim 2, wherein the binder is a wax.

4. A molded honeycomb material according to Claim 2, wherein the binder is a thermoplastic resin.

5. A molded honeycomb material according to Claim 2, wherein the binder is a mixture of a wax and a thermoplastic resin.

6. A molded honeycomb material according to Claim 5, wherein the mixing ratio of the thermoplastic resin in the binder is 35 to 80% by weight.

7. A molded honeycomb material according to Claim 5, wherein the mixing ratio of the thermoplastic resin in the binder is 40 to 70% by weight.

8. A molded honeycomb material according to Claim 5, wherein the mixing ratio of the thermoplastic resin in the binder is 45 to 60% by weight.

9. A molded honeycomb material according to any of Claims 1 to 8, wherein the raw material powder is a ceramic powder.

10. A molded honeycomb material according to Claim 9, wherein the raw material powder is cordierite.

11. A molded honeycomb material according to any of Claims 1 to 8, wherein the raw material powder is a metal powder.

12. A molded honeycomb material according to any of Claims 1 to 11, wherein the partition wall has a thickness of 25 to 100 µm.

13. A molded honeycomb material according to any of Claims 1 to 12, which is used as a carrier for catalyst for automobile exhaust gas purification.

14. A process for producing a molded honeycomb material, which comprises heating a mixture of a raw material powder and a binder to a molding temperature to melt the binder, subjecting the mixture to extrusion molding, and cooling and solidifying the extrudate.

15. A process according to Claim 14, wherein the extrusion molding is conducted by continuous kneading and extrusion molding.
